Europäisches Patentamt

European Patent Office

Office européen des brevets

(11) Publication number: **0 243 161 B1**

## EUROPEAN PATENT SPECIFICATION

(45) Date of publication of patent specification: **24.06.92**  (51) Int. Cl.⁵: **B32B 25/10**

(21) Application number: **87303520.8**

(22) Date of filing: **22.04.87**

(54) Microwave-absorptive composite.

(30) Priority: **22.04.86 JP 91280/86**
**14.05.86 JP 108634/86**

(43) Date of publication of application:
**28.10.87 Bulletin 87/44**

(45) Publication of the grant of the patent:
**24.06.92 Bulletin 92/26**

(84) Designated Contracting States:
**DE FR GB IT**

(56) References cited:
**DE-A- 1 955 834**
**US-A- 2 923 689**

**CHEMICAL ABSTRACTS, vol. 88, no. 18, 1st
May 1978, page 607, abstract no. 130013j,
Columbus, Ohio, US; & JP-A-77 131 200
(NIPPON TELEGRAPH AND TELEPHONE PUB-
LIC CORP.) 02-11-1977**

(73) Proprietor: **THE YOKOHAMA RUBBER CO.,
LTD.**
**36-11, Shinbashi 5-chome Minato-ku
Tokyo, 105(JP)**

(72) Inventor: **Hiza, Misao**
**19-37, Sodegahama
Hiratsuka-shi Kanagawa-ken(JP)**
Inventor: **Yamazaki, Hajime**
**112-2, Nishiotake
Hadano-shi Kanagawa-ken(JP)**
Inventor: **Sugihara, Kazuhiro**
**4-107, Takahamadai 1-banchi
Hiratsuka-shi Kanagawa-ken(JP)**
Inventor: **So, Tetsu**
**2-20-208, Asama-cho
Hiratsuka-shi Kanagawa-ken(JP)**

(74) Representative: **White, Martin David et al
MARKS & CLERK 57/60 Lincoln's Inn Fields
London WC2A 3LS(GB)**

## Description

This invention relates to microwave-absorptive composite materials for use in ships, aircrafts and other mobile objects.

Microwave-absorptive materials are broadly classified into an attenuation type in which the energy of incident wave attenuates as it passes through the absorber, and a matching type in which the amount of reflection of incident wave on the front surface of the absorber and that of reflection of wave from a reflector on the rear surface of the absorber are controlled so as to in effect eliminate the generation of reflected wave.

A typical matching-type wave absorber well known in the art comprises an absorbing layer made up of a synthetic resin or rubber sheet carrying magnetic ferrite ($Fe_2O_3$). This type of material excels of course in wave absorption, but is rather heavy, hence unsuitable for light-weight applications and furthermore structurally weak as it is a resinous or rubber sheet simply admixed with ferrite. Attempts were made to produce a light-weight microwave absorber from a rubber composition having dispersed therein carbonblack particles in place of ferrite. Such absorber was however effective only in handling a narrow band of microwaves. It has been known that wave absorption over wide bands can be achieved by the use of multi-layered absorbers. This would however involve considerable difficulty in fabrication chiefly because of the different characteristic properties of the different layers. The outermost layer consists usually of fiber-reinforced thermosetting resin. Whereas, the intermediate layer contains carbonblack particles to permit partial absorption and partial transmission of incident wave and hence cannot for this reason be the same composition as the outermost layer. Likewise, the innermost layer must be of a different composition having metal or carbon fibers to afford wave reflection. Thus, all these layers are different in linear expansion coefficient with the result that the finished product upon formation with heat becomes strained, warped or otherwise deformed.

GB-A-1, 074, 971 discloses a laminated microwave absorptive packaging material comprising;

a fibrous packing material;

a microwave absorptive layer applied to one surface of the said packing material, said surface facing away from the incident microwave radiation;

and a reflecting layer consisting either of a metallic foil or a metallic powder sprayed with a lacquer, said absorptive layer being intermediate the packing material and the reflecting layer.

However, GB-A-1,074 971 does not disclose an intermediate layer comprising a normally liquid silicone rubber filled with carbonblack.

Moreover, GB-A-1, 074, 971 does not address the problem of providing a microwave absorptive composite which has excellent heat resistance and structural strength and which is free from distortion or warping.

With the foregoing difficulties of the prior art in view, the present invention is aimed at the provision of an improved microwave absorptive composite which is capable of wave absorption over a wide band; free from deformation or distortion; and excellent in heat resistance and structural strength.

This and other objects and features of the invention will be better understood from the following detailed description.

The invention provides a microwave absorptive composite as claimed in claims 1 to 10.

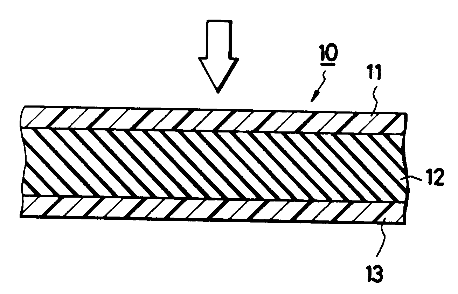

The accompanying drawing is a cross-sectional view of part of the microwave absorptive composite embodying the invention.

As shown in the drawing, the microwave absorptive composite 10 comprises at least three different layers; i.e. an outermost layer 11, an intermediate layer 12 and an innermost layer 13 which are laminated or otherwise united in this order. The arrow indicates the direction of incidence of a microwave.

The outermost layer 11 comprises a thermosetting resin impregnated with an organic or inorganic fiber. The thermosetting resin is selected from the group consisting of epoxy, unsaturated polyester, novolak, polyimide and phenol resins. The organic fiber includes synthetic fibers of polyester, polyamide, acryl and polyvinyl alcohol, of which an aromatic polyamide fiber is preferred for its heat resistance and mechanical strength. The inorganic fiber includes silica, silicon carbide, alumina, and boron nitride. When impregnated in the thermosetting resin, the organic and inorganic fibers may be disposed in the form of a woven or knitted fabric, or a blind. Alternatively, the fibers may be simply combed unidirectionally where they are relatively long, or may be dispersed randomly where they are relatively short.

The outermost layer 11 may further consist of an additional layer or layers including small quantities of particulate carbonblack admixed in the thermosetting resin.

The thickness of the outermost layer 11 is preferably in the range of 2.0 - 6.4 mm, more preferably in the range of 2.8 - 4.5 mm.

Turning to the intermediate layer 12, this comprises a silicone rubber admixed with carbonblack particles. According to an important aspect of the invention, there is used a normally liquid silicone rubber having dispersed therein a particulate carbonblack. Conventional normally solid rubber when added with carbonblack exhibits a dielectric loss factor (tan $\delta$ = $\epsilon''/\epsilon'$) of much smaller than 1. In fact, this value would be as small as 0.41 in the case where 30 parts by weight of carbonblack is used per 100 parts by weight of solid silicone rubber. In contrast to this, the tan $\delta$ value approximates 1 with liquid silicone rubber, which literally indicates increased absorption and reduced reflection of microwaves. The choice of silicone as the liquid rubber is attributed to its resistance to heat and low temperature alike, rendering the wave absorber suitable for application with ocean- and aircrafts.

Liquid silicone rubber eligible for the purpose of the invention is of a one-pack type such as de-acetic acid type, de-oxime type and de-acetone type, or of a two-pack type catalytically curable, both of which are curable preferably at room temperature but may be cured with heat at about 50° - 200°C.

Carbonblack contents in the intermediate layer 12, though dependent upon the composition of the outermost layer 11, are preferably 50% by weight or less, more preferably 20 - 40% by weight, as it is difficult to make uniform distribution of more than 50 wt.% carbonblack over the rubber layer. There may be provided a plurality of layers each having different carbonblack contents. The thickness of the layer 12 is preferably 0.25 - 4 mm, more preferably 0.8 - 2.0 mm.

Now, the innermost layer 13 consists of a sheet of thermosetting resin reinforced with carbon fiber or wire mesh, a sheet of metal, a resinous sheet incorporating a particulate metal, or a resinous sheet surface-welded with a metal. The carbon fiber, if cut short, may be randomly dispersed, and if long, may be drawn unidirectionally together. It may be knitted into a grid form.

The thermosetting resin for the innermost layer 13 may be epoxy, unsaturated polyester, novolak, polyimide and phenol resins.

The wire mesh referred to above may be made of aluminum, iron, copper and brass.

The resinous sheet containing a particulate metal may be an epoxy resin and the particulate metal therefor may be aluminum, iron and copper.

The metal sheet used for the innermost layer may be a sheet of lightweight aluminum or aluminum alloys.

The above three layers 11, 12 and 13 are finally interconnected into an integral form, in which instance the intermediate layer 12 may be pre-cured and sandwiched between the outer and inner layers 11 and 13 that are unhardened and then cured to set, or the outer and inner layers 11 and 13 may be hardened separately and the intermediate layer 12 is interposed therebetween and then cured together, or all of the three layers may be separately cured and adhesively bonded together.

Inventive Example 1

A blend of resins including 80 grams of N,N,N',N'-tetraglycidyl di-(para aminodiphenyl)-methane (tradename ELM 434, manufactured by Sumitomo Chemical Co.), 20 grams of cresol novolak epoxy (tradename ESCN 220 HH, manufactured by Sumitomo Chemical Co.), 44 grams of 1,3-propanediol di-para-aminobenzoate (tradename CUA-4, manufactured by Iraha Chemical Co.), and 0.5 gram of $BF_3$-monoethylamine complex (tradename Sumicure BF-M, manufactured by Sumitomo Chemical Co.) was formed into a sheet 0.25 mm thick which was laminated with a cloth of aromatic polyamide fiber (tradename Kevlar, manufactured by Dupont) and then impregnated with resin to provide a prepreg (K-Pre). The resulting prepreg upon hardening showed a glass-transition temperature of 230°C. In a similar manner, there was prepared a prepreg (C-Pre) of carbon fiber cloth. 100 parts by weight of liquid silicone rubber (tradename KE-108, manufactured by Shinetsu Chemical Industry Co.) and 40 parts by weight of carbonblack (ISAF) were admixed and pulverized by a paint mill. The rubber was press-formed at 80°C and 0.9806 MPa (10 kg/cm$^2$) for 30 minutes into a sheet 1.8 mm thick. This sheet was laminated on one side with 15 sheets of K-Pre and on the other side with 7 sheets of C-Pre, and then cured in an autoclave at 180°C and 0.6374 MPa (6.5 kg/cm$^2$) for 2 hours. The resulting composite was found perfectly flat with no warp or sag, and tested for microwave absorption capabilities to show above 14 dB over a given band.

Inventive Example 2

K-Pre and C-Pre both prepared as per Inventive Example 1 were cured in an autoclave. The rubber sheet was also made as in Inventive Example 1. The three layers were bonded together with a silicone adhesive. The resulting composite was flat and free of surface defects. Wave absorption test showed above 20 dB over a given microwave band.

Comparative Example 1

There was prepared an intermediate layer from a blend of thermosetting resins of the same composition as that of the outer and inner layers, the blend being similar to Inventive Example 1 and admixed with carbonblack. The resinous layer was laminated on one side with C-Pre and on the other side with K-Pre and cured in an autoclave. The resulting composite was found warped. The intermediate layer cracked when cooled to room temperature.

Comparative Example 2

The intermediate layer was interposed between separately cured outer and inner layers and bonded in place with an adhesive of the same blend as the matrix resin for each layer and pressed into a sheet at I80°C for 2 hours. The resulting composite sheet when removed from the press was found considerably warped. This was attributable to large thermal expansion differences between the respective layers and was not improved even through many different curing conditions for the adhesive.

Inventive Example 3

A blend of resins including 80 grams of N,N,N',N'-tetraglycidyl di-(para-aminodiphenyl)-methane (tradename ELM 434, manufactured by Sumitomo Chemical Co.), 20 grams of cresol novolak epoxy (tradename ESCN 220 HH, manufactured by Sumitomo Chemical Co.), 35 grams of 4,4'-diaminodiphenylsulfone (tradename Sumicure S, manufactured by Sumitomo Chemical Co.), and 0.5 gram of $BF_3$-monoethylamine complex (tradename Sumicure BF-M, manufactured by Sumitomo Chemical Co.) was formed into a sheet 0.25 mm thick which was laminated with a cloth of aromatic polyamide fiber (tradename Kevlar, manufactured by DuPont) and then impregnated with resin to provide a prepreg (K-Pre) as in Inventive Example 1. The resulting prepreg upon hardening showed a glass-transition temperature of 235°C. In a similar manner, there was prepared a prepreg (C-Pre) of carbon fiber cloth. 100 parts by weight of liquid silicone rubber (tradename KE-108, manufactured by Shinetsu Chemical Industry Co.) and 40 parts by weight of carbonblack (ISAF) were admixed and pulverized by a paint mill. The rubber was press-formed at 80°C and 0.9806 MPa (10 kg/cm²) for 30 minutes into a sheet 1.8 mm thick. This sheet was laminated on one side with 15 sheets of K-Pre and on the other side with 7 sheets of C-Pre, and then cured in an autoclave at 180°C and 0.6374 MPa (6.5 kg/cm²) for 2 hours. The resulting composite was found perfectly flat with no warp or sag, and tested for microwave absorption capabilities to show above 15 dB over a given band.

Inventive Example 4

A prepreg (G-Pre) was prepared from a cloth of glass fibers and a blend of resins including 72 grams of a resin chiefly including bismaleimide-triazine resin (tradename BT 2160, manufactured by Mitsubishi Gas Chemical Co.), 28 grams of an expoxy resin (tradename Epikote 1001, manufactured by Yuka Shell Co.), and 0.22 gram of catalyst (0.02 gram of zinc octanonate and 0.2 gram of dicumyl peroxide), as in Inventive Example 1. Also a prepreg (C-Pre) was prepared from the same blend of resins and a cloth of carbon fibers, as in Inventive Example 1. The resulting prepreg upon hardening showed a glass-transition temperature of 220°C. 100 parts by weight of liquid silicone rubber (tradename KE-108, manufactured by Shinetsu Chemical Industry Co.) and 40 parts by weight of carbonblack (ISAF) were admixed and pulverized by a paint mill. The rubber was press-formed at 80°C and 0.9806 MPa (10 kg/cm²) for 30 minutes into a sheet 1.8 mm thick. This sheet was laminated on one side with 15 wheets of G-Pre and on the other side with 7 sheets of C-Pre, and then cured in an autoclave at 180°C and 0.6374 MPa (6.5 kg/cm²) for 2 hours. The resulting composite was found perfectly flat with no warp or sag, and tested for microwave absorption capabilities to show above 14 dB over a given band.

**Claims**

1. A microwave absorptive composite (10) comprising a fibrous outermost layer (11), a rubbery intermediate layer (12) and a resinous innermost layer (13) laminated in the order mentioned into an integral sheet structure, characterized in that said outermost layer (11) comprises an organic or inorganic fibrous sheet impregnated with a thermosetting resin; in that said intermediate layer (12) comprises a rubber sheet of a normally liquid silicone rubber admixed with a carbon black; in that said innermost layer (13) comprises a thermosetting resin sheet reinforced with a carbon fiber, a metal fiber or wire mesh, a metal sheet, a resin sheet containing a particulate metal, or a resin sheet surface-welded with a metal; and in that said thermosetting resin of each of said outermost and innermost layers is selected from the group consisting of epoxy, unsaturated polyester, novolak, polyimide and phenol resins.

2. A microwave absorptive composite (10) according to claim 1 wherein said carbon black is present in an amount of less than 50 parts by weight per 100 parts by weight of said silicone rubber.

3. A microwave absorptive composite (10) according to claim 1 or 2 wherein said fibrous sheet of said outermost layer (11) comprises polyester, polyamide, acrylic or polyvinyl alcohol fibers.

4. A microwave absorptive composite (10) according to claim 1 or 2 wherein said fibrous sheet of said outermost layer (11) comprises silica, silicon carbide, alumina or boron nitride fibers.

5. A microwave absorptive composite (10) according to any one preceding claim wherein said silicone rubber is of a one-pack type curable at room temperature or a two-pack type catalytically curable at about 50 - 200°C.

6. A microwave absorptive composite (10) according to any one preceding claim wherein said outermost layer (11) has a thickness within the range of 2.0 - 6.4 mm.

7. A microwave absorptive composite (10) according to any one preceding claim wherein said intermediate layer (12) has a thickness within the range of 0.25 - 4 mm.

8. A microwave absorptive composite (10) according to any one preceding claim wherein said wire mesh in said innermost layer (13) comprises aluminum, iron, copper or brass.

9. A microwave absorptive composite (10) according to any one preceding claim wherein said metal sheet in said innermost layer (13) comprises aluminum or an aluminum alloy.

10. A microwave absorptive composite (10) according to any one preceding claim wherein said particulate metal-containing resin sheet in said innermost layer (13) comprises epoxy resin and aluminum, iron or copper.

**Revendications**

1. Un composé absorbant les micro-ondes (10) comprenant une couche externe fibreuse (11), une couche intermédiaire en caoutchouc (12) et une couche interne en résine (13), laminées dans l'ordre indiqué en une structure de feuille intégrale, caractérisé en ce que ladite couche externe (11) comprend une feuille fibreuse organique ou inorganique imprégnée d'une résine thermodurcissable; en ce que ladite couche intermédiaire (12) comprend une feuille en caoutchouc d'un caoutchouc au silicone normalement liquide mélangé avec du noir de carbone; en ce que ladite couche interne (13) comprend une feuille de résine thermodurcissable renforcée par une fibre de carbone, une fibre métallique ou un treillis de fil métallique, une feuille métallique, une feuille de résine contenant un métal particulaire ou une feuille de résine dont la surface est soudée sur un métal; et en ce que ladite résine thermodurcissable de chacune des dites couches externe et interne est choisie dans le groupe constitué de résines époxyde, de résines de polyester non saturé, de résines de novolaque, de résines de polyimide et de résines de phénol.

2. Un composé absorbant les micro-ondes (10) selon la revendication 1, dans lequel ledit noir de carbone est présent en une quantité représentant moins de 50 parties en poids pour 100 parties en poids du dit caoutchouc au silicone.

3. Un composé absorbant les micro-ondes (10) selon la revendication 1 ou 2, dans lequel ladite feuille fibreuse de ladite couche externe (11) comprend des fibres de polyester, de polyamide, des fibres acryliques ou d'alcool polyvinylique.

4. Un composé absorbant les micro-ondes (10) selon les revendications 1 ou 2, dans lequel ladite feuille fibreuse de ladite couche externe (11) comprend des fibres de silice, de carbure de silicium, d'oxyde d'aluminium ou de nitrure de bore.

5. Un composé absorbant les micro-ondes (10) selon l'une quelconque des revendications précédentes, dans lequel ledit caoutchouc au silicone est du type à un composant, pouvant être vulcanisé à température ambiante ou du type à deux composants pouvant être vulcanisé par catalyse à une température de l'ordre de 50 à 200°C.

6. Un composé absorbant les micro-ondes (10) selon l'une quelconque des revendications précédentes, dans lequel ladite couche externe (11) a une épaisseur comprise entre 2,0 et 6,4 mm.

7. Un composé absorbant les micro-ondes (10) selon l'une quelconque des revendications précédentes, dans lequel ladite couche intermédiaire (12) a une épaisseur comprise entre 0,25 et 4 mm.

8. Un composé absorbant les micro-ondes (10) selon l'une quelconque des revendications précédentes, dans lequel ledit treillis de fil métallique dans ladite couche interne (13) comprend de l'aluminium, du fer, du cuivre ou du laiton.

9. Un composé absorbant les micro-ondes (10) selon l'une quelconque des revendications précédentes, dans lequel ladite feuille de métal dans ladite couche interne (13) comprend de l'aluminium ou un alliage d'aluminium.

**10.** Un composé absorbant les micro-ondes (10) selon l'une quelconque des revendications précédentes, dans lequel ladite feuille de résine contenant un métal particulaire dans ladite couche interne (13) comprend de la résine époxyde et de l'aluminium, du fer ou du cuivre.

**Patentansprüche**

**1.** Mikrowellenabsorbierender Verbund (10), umfassend eine faserhaltige Außenschicht (11), eine gummihaltige Zwischenschicht (12) und eine kunststoffhaltige Innenschicht (13), die in der genannten Reihenfolge zu einem einstückigen Schichtverbund laminiert sind, dadurch **gekennzeichnet,** daß die Außenschicht (11) eine mit einem warmhärtbaren Kunststoff getränkte Bahn aus organischen oder anorganischen Fasern umfaßt; daß die Zwischenschicht (12) eine Gummibahn aus normalerweise flüssigem Silikongummi umfaßt, der mit Ruß vermischt ist; daß die Innenschicht (13) eine Bahn aus warmhärtbarem Kunststoff umfaßt, die mit Kohlenstoffasern, Metalldrähten oder einem Metallnetz, einem Metallblech, einer Metallteilchen enthaltenden Kunststoffbahn oder einer mit einer Metallschicht versehenen Kunststoffbahn verstärkt ist, und daß der warmhärtbare Kunststoff sowohl der Außenschicht als auch der Innenschicht aus der Gruppe Epoxyharze, ungesättigte Polyesterharze, Novolak, Polyimide und Phenolharze ausgewählt ist.

**2.** Mikrowellenabsorbierender Verbund (10) nach Anspruch 1, wobei auf 100 Gewichtsteile des Silikongummis weniger als 50 Gewichtsteile Ruß vorhanden sind.

**3.** Mikrowellenabsorbierender Verbund (10) nach Anspruch 1 oder 2, wobei die faserhaltige Bahn der Außenschicht (11) Polyester-, Polyamid-, Acryl- oder Polyvinylalkoholfasern enthält.

**4.** Mikrowellenabsorbierender Verbund (10) nach Anspruch 1 oder 2, wobei die faserhaltige Bahn der Außenschicht (11) Silizium-, Siliziumkarbid-, Aluminium- oder Bornitridfasern enthält.

**5.** Mikrowellenabsorbierender Verbund (10) nach einem der vorhergehenden Ansprüche, wobei der Silikongummi von der Einkomponentenart ist, die bei Raumtemperatur aushärtet, oder von der Zweikomponentenart ist, die bei ungefähr 50 bis 200 °C katalytisch aushärtet.

**6.** Mikrowellenabsorbierender Verbund (10) nach einem der vorhergehenden Ansprüche, wobei die Außenschicht (11) eine Dicke von 2.0 bis 6,4 mm hat.

**7.** Mikrowellenabsorbierender Verbund (10) nach einem der vorhergehenden Ansprüche, wobei die Zwischenschicht (12) eine Dicke von 0,25 bis 4 mm hat.

**8.** Mikrowellenabsorbierender Verbund (10) nach einem der vorhergehenden Ansprüche, wobei das Drahtnetz in der Innenschicht (13) aus Aluminium, Eisen, Kupfer oder Messing besteht.

**9.** Mikrowellenabsorbierender Verbund (10) nach einem der vorhergehenden Ansprüche, wobei das Metallblech in der Innenschicht (13) aus Aluminium oder einer Aluminiumlegierung besteht.

**10.** Mikrowellenabsorbierender Verbund (10) nach einem der vorhergehenden Ansprüche, wobei die Metallteilchen enthaltende Kunststoffbahn der Innenschicht (13) aus Epoxyharz und Aluminium, Eisen oder Kupfer besteht.